# EUROPEAN PATENT APPLICATION

(11) **EP 4 546 920 A1**
(43) Date of publication of application: **30.04.2025**
(21) Application number: 23881242.4
(22) Date of filing: 13.06.2023
(51) Int. Cl.: H04W 72/0453, H04W 72/29, H04W 72/00

(54) **RESOURCE ALLOCATION METHOD, AND DEVICE AND STORAGE MEDIUM**

(30) Priority: 24.10.2022 CN 202211305867
(71) Applicant: ZTE Corporation, Shenzhen, Guangdong 518057 (CN)
(72) Inventor: ZHANG, Nan, Shenzhen, Guangdong 518057 (CN); DOU, Jianwu, Shenzhen, Guangdong 518057 (CN)
(74) Representative: Aipex B.V.
(86) International application number: PCT/CN2023/099943
(87) International publication number: WO 2024/087651

(57) **Abstract**

Provided are a resource allocation method, a device, and a storage medium. The resource allocation method applied by a first communication node includes receiving (S110) at least two resource requests forwarded by a second communication node and carrying to-be-transmitted service data; classifying (S120) the to-be-transmitted service data carried by each resource request to obtain unicast transmission data and multicast transmission data; and allocating (S130) a unicast transmission resource and a multicast transmission resource to the unicast transmission data and the multicast transmission data respectively.

## Description

### TECHNICAL FIELD

The present application relates to the field of communications, for example, a resource allocation method, a device, and a storage medium.

### BACKGROUND

Integrated access backhaul (IAB) is a technique used in the fifth-generation (5G) mobile communication to reduce the costs of wired transmission in hotspot areas and in areas where base station deployment is challenging. IAB uses wireless spectrum resources that 5G base stations use for user equipment (UE) access to backhaul traffic collected by an IAB node to an IAB donor node and connect the traffic to the wired network.

### SUMMARY

Embodiments of the present application provide a resource allocation method, a device, and a storage medium, enabling effective allocation of resources and saving spectrum resources required for backhaul.

An embodiment of the present application provides a resource allocation method. The resource allocation method is applied by a first communication node. The resource allocation method includes the following:
At least two resource requests forwarded by a second communication node and carrying to-be-transmitted service data are received; the to-be-transmitted service data carried by each of the at least two resource requests are classified to obtain unicast transmission data and multicast transmission data; and a unicast transmission resource and a multicast transmission resource are allocated to the unicast transmission data and the multicast transmission data respectively.

An embodiment of the present application provides a resource allocation method. The resource allocation method is applied by a second communication node. The resource allocation method includes the following:

At least two resource requests carrying to-be-transmitted service data are forwarded to a first communication node to enable the first communication node to classify the to-be-transmitted service data carried by the at least two resource requests to obtain unicast transmission data and multicast transmission data; and a unicast transmission resource and multicast transmission resource allocated by the first communication node are received.

An embodiment of the present application provides a communication device. The communication device includes a memory and one or more processors. The memory is configured to store one or more programs. When executed by the one or more processors, the one or more programs cause the one or more processors to perform the resource allocation method of any previous embodiment.

An embodiment of the present application provides a storage medium storing a computer program which, when executed by a processor, causes the processor to perform the resource allocation method of any previous embodiment.

### BRIEF DESCRIPTION OF DRAWINGS

FIG. 1 is a flowchart of a resource allocation method according to an embodiment of the present application.
FIG. 2 is another flowchart of a resource allocation method according to an embodiment of the present application.
FIG. 3 is a diagram illustrating network wireless link communication in the related art.
FIG. 4 is a diagram illustrating network wireless link communication according to an embodiment of the present application.
FIG. 5 is a diagram illustrating access through a backhaul link in the related art.
FIG. 6 is a diagram illustrating access through a backhaul link according to an embodiment of the present application.
FIG. 7 is a diagram illustrating interaction for resource allocation according to an embodiment of the present application.
FIG. 8 is a block diagram of a resource allocation apparatus according to an embodiment of the present application.
FIG. 9 is a block diagram of a resource allocation apparatus according to an embodiment of the present application.
FIG. 10 is a diagram illustrating the structure of a communication device according to an embodiment of the present application.

### DETAILED DESCRIPTION

Embodiments of the present application are described hereinafter in conjunction with drawings. The present application is described hereinafter in conjunction with embodiments and drawings. The examples illustrated are intended to explain the present application.

The rapid development of 5G mobile communication networks is gradually evolving towards 6G on both technological and service fronts. Service elements are expanding from humans to intelligent agents, physical space, and virtual space elements. The demand for information processing functions is shifting from information transmission to information collection and computation. AI services, immersive experiences, and digital twin applications are increasingly penetrating vertical industries, and emerging services are raising higher demands for end-to-end information processing capabilities in 6G networks. This makes the integration of communication and perception one of the dominant trends in 6G technology and services.

Communication refers to the transmission of information between two or more points, while perception involves detecting parameters of the physical environment, such as speed measurement and target localization. The integration of communication and perception means merging these two functions, enabling future communication systems to simultaneously perform both tasks. This involves actively recognizing and analyzing the characteristics of channels to sense the physical features of the surrounding environment while transmitting information over the wireless channels, thereby enhancing both communication and perception capabilities. In the integration of communication and perception, the focus of the perception is on wireless signal perception. This is achieved by analyzing direct, reflected, and scattered radio wave signals to gather information about target objects or environmental attributes and states. Functions such as localization, ranging, speed measurement, imaging, detection, recognition, and environmental reconstruction can be performed to explore and understand the physical world. For instance, utilizing base station signals to sense surrounding environmental information can help design communication links that avoid obstacles, thereby improving the communication performance. The integration of communication and perception has become a significant research direction for 5G+ and 6G and is expected to be a development trend for the capabilities of 6G base stations and terminals.

With the development of communication technology, the performance of terrestrial mobile communication systems also urgently needs improvement. Identifying changes in the service environment is a critical challenge in enhancing terrestrial mobile communication performance. The real-time variation characteristics of mobile user locations within the coverage area, along with changes in the wireless terrestrial environment, such as traffic flow and pedestrian movement, have always been key factors in optimizing the network quality. How terrestrial mobile communication systems can dynamically identify variations in service demand intensity and environmental changes within the service area is of utmost importance for enhancing the network scheduling performance.

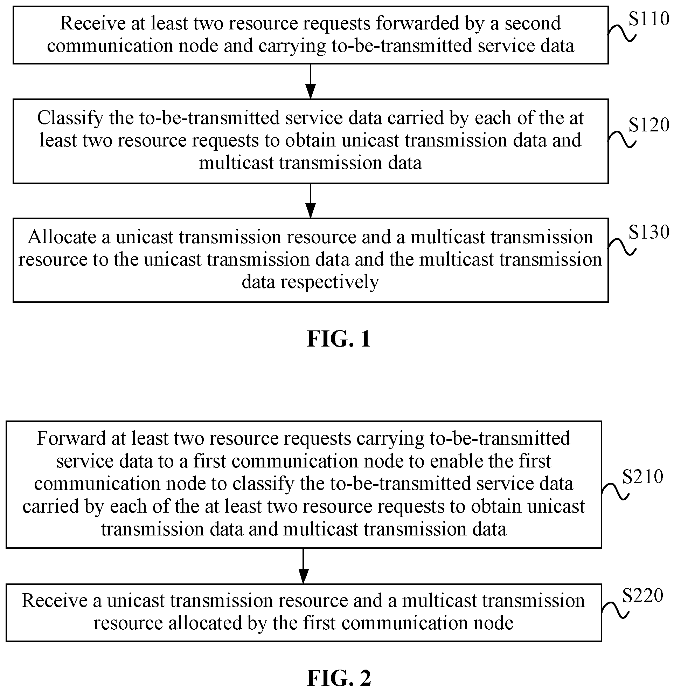

FIG. 1 is a flowchart of a resource allocation method according to an embodiment of the present application. This embodiment may be implemented by a first communication node. By way of example, the first communication node may be a network (such as a core network) side. As shown in FIG. 1, this embodiment includes S110 to S130.

In S110, at least two resource requests forwarded by a second communication node and carrying to-be-transmitted service data are received.

A resource request is used for requesting the first communication node to allocate resources for the second communication node. In an embodiment, the second communication node receives a new resource request sent by a third communication node, and the new resource request is forwarded to the first communication node through the second communication node, requesting the first communication node to analyze the resource request and the to-be-transmitted service data carried by the resource request.

In S120, the to-be-transmitted service data carried by each of the at least two resource requests is classified to obtain unicast transmission data and multicast transmission data.

Unicast transmission data may be understood as the unique data (that is, different data) present in the to-be-transmitted service data carried by the at least two resource requests. Multicast transmission data may be understood as the common data (that is, identical data) existing in the to-be-transmitted service data carried by the at least two resource requests. Multicast may also be understood as groupcast, and correspondingly, multicast transmission data may be understood as groupcast transmission data. In an embodiment, after the first communication node receives the resource requests and the to-be-transmitted service data they carry, the first communication node analyzes and classifies the resource requests and the to-be-transmitted service data to obtain the common data and unique data in the to-be-transmitted service data carried by the at least two resource requests. The common data is categorized as the corresponding multicast transmission data, while the unique data is categorized as the corresponding unicast transmission data. In an embodiment, when the at least two resource requests received by the first communication node are at the same position, the to-be-transmitted service data carried by the resource requests may contain identical data. This identical data may be classified as the multicast transmission data, while the different data in the two resource requests may be classified as the unicast transmission data.

In S130, a unicast transmission resource and a multicast transmission resource are allocated to the unicast transmission data and the multicast transmission data respectively.

A unicast transmission resource refers to the resource used for unicast transmission between the second communication node and one third communication node. A multicast transmission resource refers to the resource used for multicast/groupcast transmission between the second communication node and multiple third communication nodes. In an embodiment, after the first communication node allocates the corresponding unicast transmission resource and multicast transmission resource for the unicast transmission data and multicast transmission data respectively, the first communication node shares the resource allocation information with the second communication node. This allows the second communication node to execute the resource allocation according to the resource allocation information and instructs the third communication node to access the corresponding unicast transmission resource and multicast transmission resource.

In an embodiment, the second communication node receives a new resource request sent by the third communication node, and the new resource request is forwarded to the first communication node through the second communication node so that the first communication node is requested to allocate resources for the second communication node, thereby obtaining the corresponding resource allocation information. The resource allocation information is then shared with the second communication node so that the second communication node executes resource allocation based on the resource allocation information. The allocated resources are indicated to the third communication node so that the third communication node transmits service data using the allocated resources.

In an embodiment, the resource allocation method applied by the first communication node also includes sending the unicast transmission resource and the multicast transmission resource to the second communication node to enable the second communication node to instruct a third communication node to transmit the unicast transmission data by using the unicast transmission resource and transmit the multicast transmission data by using the multicast transmission resource.

In the embodiment, the first communication node shares the resource allocation information with the corresponding second communication node, enabling the second communication node to allocate resources according to the resource allocation information. This results in the corresponding multicast transmission resource and unicast transmission resource, which are then indicated to the third communication node. Consequently, the third communication node uses the unicast transmission resource to transmit unique data and uses the multicast transmission resource to transmit the common data carried by multiple resource requests, thereby reducing the data load on the backhaul link and saving wireless resources.

In an embodiment, classifying the to-be-transmitted service data carried by each resource request to obtain the unicast transmission data and the multicast transmission data includes determining a service type of the to-be-transmitted service data carried by each resource request; and classifying the to-be-transmitted service data according to the service type to obtain the unicast transmission data and the multicast transmission data. The service type refers to the classification of the service corresponding to the to-be-transmitted service data. By way of example, the service type may include, but is not limited to, a wireless paging service and a mobile telephone service. In an embodiment, upon receiving a resource request, the first communication node retrieves the to-be-transmitted service data carried in the resource request to determine the service type in the to-be-transmitted service data. The first communication node then identifies and distinguishes the common data and unique data from the service data of the same type and designates the common data as the corresponding multicast transmission data and the unique data as the corresponding unicast transmission data.

In an embodiment, classifying the to-be-transmitted service data carried by each resource request to obtain the unicast transmission data and the multicast transmission data includes determining a similarity between the to-be-transmitted service data carried by each resource request; and classifying the to-be-transmitted service data according to the similarity to obtain the unicast transmission data and the multicast transmission data. Here similarity refers to the degree of similarity between service data carried by each pair of resource requests. In the embodiment, the first communication node retrieves the to-be-transmitted service data carried by each resource request and analyzes and compares the to-be-transmitted service data between every two resource requests to determine their similarity. If the similarity reaches a preset similarity threshold, this portion of data can be designated as the common data between the service data carried by the two resource requests, that is, the corresponding multicast transmission data. Conversely, if the similarity does not satisfy the threshold, this portion of data can be classified as unique data between the service data carried by the two resource requests, that is, the corresponding unicast transmission data.

In an embodiment, classifying the to-be-transmitted service data carried by each resource request to obtain the unicast transmission data and the multicast transmission data includes classifying, using artificial intelligence, the to-be-transmitted service data carried by each resource request to obtain the unicast transmission data and the multicast transmission data. In the embodiment, the first communication node may manage resource requests forwarded from multiple second communication nodes, and each second communication node may be associated with multiple third communication nodes. Given the dynamic changes in the services initiated by the third communication nodes, if classification of the to-be-transmitted service data cannot be effectively achieved using similarity or service type methods, the artificial intelligence technology can be used to reduce the complexity of the to-be-transmitted service data. This classification allows for the identification of the corresponding unicast and multicast transmission data, thereby conserving the allocated resources and the spectrum resources required for backhaul transmission.

In an embodiment, the total amount of transmission resources occupied by the multicast transmission data is less than the total amount of transmission resources occupied by the unicast transmission data. During the actual communication process, there may be interference among the transmitted information while the multicast transmission resources are used to transmit multicast data. In the embodiment, the total amount of transmission resources occupied by the multicast transmission data (that is, the total resources for multicast transmission) is configured to be less than the total amount of transmission resources occupied by the unicast transmission data (that is, the total resources for unicast transmission). This configuration helps to avoid interference caused by the need for multicast transmission to also occupy wireless spectrum resources as well as the synchronization of wireless spectrum resources for multicast across adjacent cells. Consequently, this approach reduces data transmission interference and enhances the accuracy of data transmission.

FIG. 2 is a flowchart of a resource allocation method according to an embodiment of the present application. This embodiment may be implemented by a second communication node. By way of example, the second communication node may be a base station. As shown in FIG. 2, this embodiment includes S210 and S220.

In S210, at least two resource requests carrying to-be-transmitted service data are forwarded to a first communication node to enable the first communication node to classify the to-be-transmitted service data carried by each of the at least two resource requests to obtain unicast transmission data and multicast transmission data.

In S220, a unicast transmission resource and a multicast transmission resource allocated by the first communication node are received.

In an embodiment, when the second communication node receives a new resource request sent by a third communication node, the second communication node forwards the resource request along with the carried to-be-transmitted service data to the first communication node. This enables the first communication node to analyze the resource request and the accompanying to-be-transmitted service data to categorize the to-be-transmitted service data into unicast transmission data and multicast transmission data. The first communication node then allocates resources for the unicast and multicast transmission resources of the connected second communication node and shares the resource allocation information with the second communication node. The second communication node performs resource allocation according to the resource allocation information and instructs the third communication node to access the corresponding unicast and multicast transmission resources.

In an embodiment, the resource allocation method applied to the second communication node also includes instructing a third communication node to transmit the unicast transmission data by using the unicast transmission resource and transmit the multicast transmission data by using the multicast transmission resource. In the embodiment, after the second communication node performs resource allocation according to the resource allocation information, the second communication node instructs the third communication node to use a unicast transmission resource for transmitting unicast transmission data and a multicast transmission resource for transmitting multicast transmission data. This allows the third communication node to use the multicast transmission resource for transmitting the common data from the to-be-transmitted service data carried by multiple resource requests and use the unicast transmission resource for transmitting the unique data from the to-be-transmitted service data carried by the multiple resource requests.

In an embodiment, the total amount of transmission resources occupied by the multicast transmission data is less than the total amount of transmission resources occupied by the unicast transmission data.

The resource allocation method applied by the second communication node involves the interpretation of parameters such as to-be-transmitted service data, resource requests, unicast transmission resources, multicast transmission resources, and total transmission resources. For detailed description of these parameters, see the description in the embodiments of the resource allocation method applied by the first communication node. This is not repeated here.

In an embodiment, the process of resource allocation is explained using a resource request analysis module configured in the first communication node as an example. In the embodiment, the resource request analysis module is configured in the first communication node to analyze resource requests through this module. Based on the analysis result, resource allocation information is shared with the second communication node, enabling the second communication node to allocate resources accordingly and indicate the allocated unicast and multicast transmission resources to the third communication node. This allows the third communication node to use the unicast transmission resource for transmitting unicast data and the multicast transmission resource for transmitting multicast data. For illustrative purposes, the first communication node refers to the core network, the second communication node refers to a next-generation NodeB (gNB), and the third communication node refers to a UE.

The resource request analysis module is deployed at a position adjacent to gNBs in the geographical area to process the analysis of resource requests from these gNBs. The functions of this module include analyzing resource requests sent by the UE and categorizing the similarity between the to-be-transmitted service data carried in these resource requests. Simple rules are prioritized for identifying whether the to-be-transmitted service data is the same. In cases where simple rules cannot be used to make a determination, the AI technology is used to identify the common parts (that is, identical parts) of the to-be-transmitted service data and to separate the identical parts from the data. The module classifies the resource requests into two parts based on the to-be-transmitted service data: unicast transmission data and multicast transmission data. The unicast transmission resource and the multicast transmission resource are used to complete the transmission of the to-be-transmitted service data requested by the UE.

To save IAB backhaul traffic, it is necessary to dynamically determine the resources occupied by multicast transmission data, the time period for multicast transmission, and the receiving users (that is, UEs) for multicast. This ensures that the total amount of resources occupied by multicast transmission resources is less than the total amount of resources occupied by unicast transmission resources. This addresses the problem that multicast transmission also requires the use of wireless spectrum resources as well as the need for wireless spectrum resources of the multicast of adjacent cells to be synchronized to reduce the interference.

The resource request analysis module manages an area covering multiple gNBs, each serving numerous UEs, with significant dynamic changes in service initiation. Simple rules are insufficient to meet these demands. Therefore, in selecting between multicast and unicast schemes for the to-be-transmitted service data of the UE, the AI technology is used to reduce complexity. This achieves savings in resource allocation and conserves the spectrum resources required for IAB backhaul.

In an embodiment, for resource requests from the same user, if they are determined to be completely identical, a single link may be utilized, prioritizing multicast transmission as the preferred transmission scheme. For resource requests from different locations, the AI approach is used to separate the common and unique parts of the data. The common parts are transmitted using multicast resources preferably while the unique parts are transmitted using unicast resources.

In an embodiment, within a contiguous area, multicast transmission resources are dynamically configured to reduce the spectrum resources occupied by IAB backhaul. In this contiguous area, resource requests of all UEs within a certain time period carry the same portions of data. The AI technology is used to separate the common and unique parts of the service data carried in the resource requests, maximizing the reduction in the total resources occupied by multicast and unicast transmission resources. This approach effectively decreases the demand for spectrum resources in IAB backhaul.

The resources involved in the present application may also be referred to as traffic; correspondingly, the resource requests discussed in the present application may be referred to as traffic requests.

In an embodiment, the technical field involved in the present application pertains to 5G, AI, and IAB, whose application focuses on merging 5G and AI traffic sources to save wireless resources for IAB. This can be applied to base stations and the 5G core network.

IAB is a key technology for reducing 5G unit deployment costs, facilitating the dense deployment of 5G in the millimeter-wave band without requiring fiber connection to each gNB. However, IAB faces limitations due to constrained wireless resources. To address this problem, the present application proposes a resource allocation method to save wireless resources for IAB.

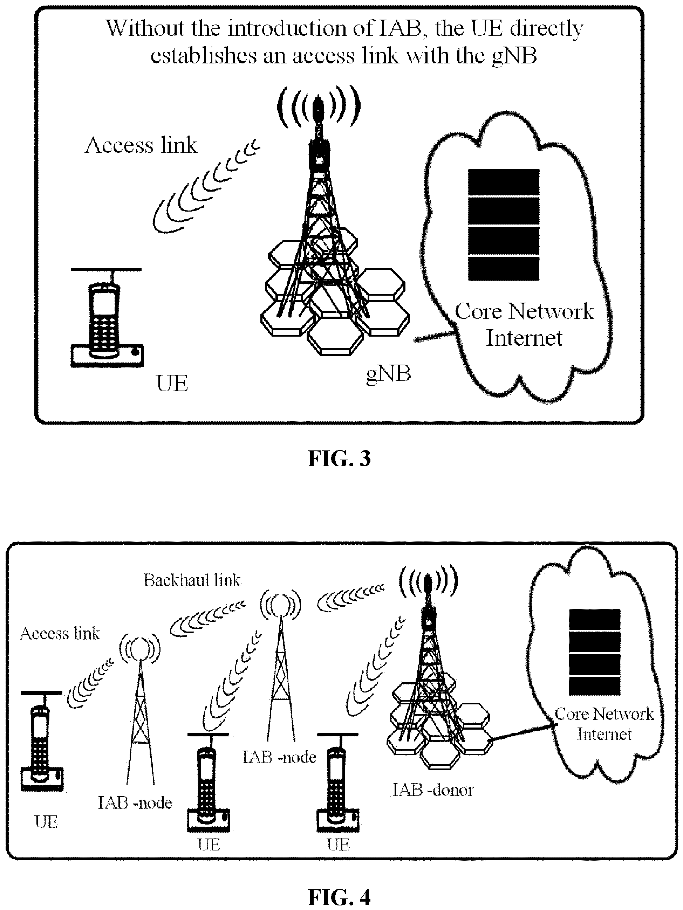

FIG. 3 is a diagram illustrating network wireless link communication in the related art. As shown in FIG. 3, before the introduction of IAB, an access link is established between the UE and the gNB.

FIG. 4 is a diagram illustrating network wireless link communication according to an embodiment of the present application. As shown in FIG. 4, the IAB node forwards the uplink (UL) and downlink (DL) data connected to the UE, with all UL and DL data entering the core network through the IAB donor.

The process of the UE entering the core network through the IAB node and IAB donor includes the following: The UE accesses the IAB node or IAB donor by accessing the gNB. The IAB node connects to another IAB node or IAB donor and finally connects to the IAB donor. The data flow involves communication of DL and UL data between the UE and its connected IAB node or IAB donor, and the IAB node forwards data of all connected UEs to the IAB donor. The UL and DL data of each UE are transmitted through the IAB node or IAB donor, ultimately reaching the IAB donor.

The UE may access the IAB node in the same way it accessing the gNB. The IAB node forwards the UL and DL data of the UE connected to the IAB node. The IAB donor has the same functions as the IAB node but additionally possesses the functionalities of the gNB. All uplink and downlink data connected to the IAB node or IAB donor will be transmitted to the core network via the IAB donor.

As shown in FIG. 4, the traditional IAB method includes nodes using wireless spectrums to forward the UL and DL data of each UE.

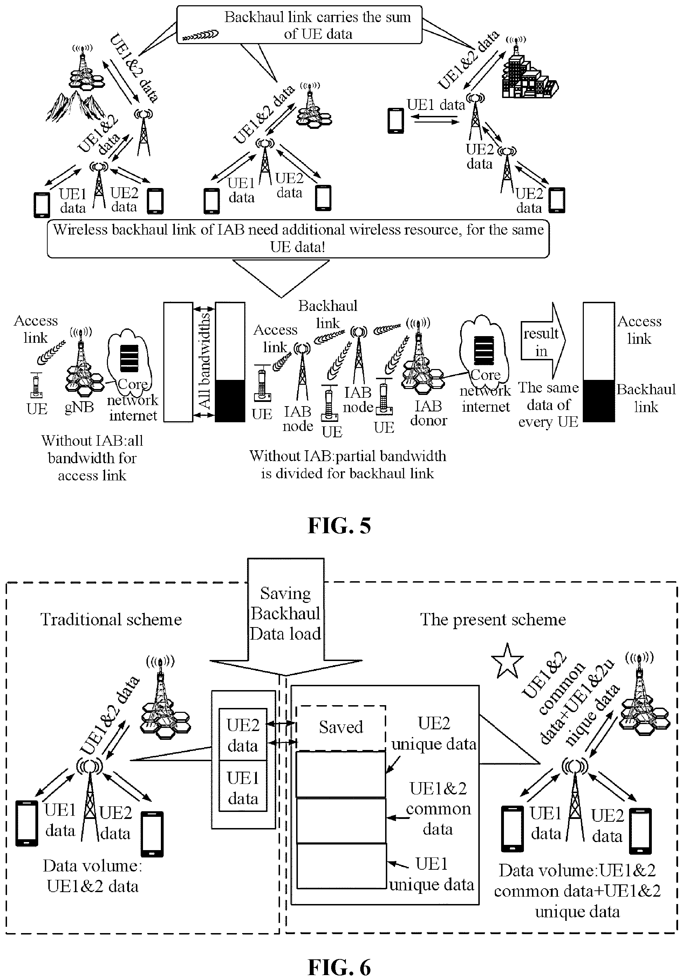

FIG. 5 is a diagram illustrating access through a backhaul link in the related art. As shown in FIG. 5, the data carried by a backhaul link is the same as that carried by the access link, but the backhaul link uses additional frequencies. Therefore, the traditional method does not reduce the total data volume of the backhaul link.

FIG. 6 is a diagram illustrating access through a backhaul link according to an embodiment of the present application. As shown in the right part of FIG. 6, when both UE1 and UE2 make resource requests, the common portion of UE1 data and UE2 data (that is, multicast transmission data) may be extracted, while the unique portions of UE1 data and UE2 data (that is, unicast transmission data) may also be separated. Then, a multicast transmission resource is used to simultaneously transmit the common portion of UE1 data and UE2 data, while two unicast transmission resources are used to transmit the unique portions of UE1 data and UE2 data respectively. Specifically, as illustrated in the right part of FIG. 6, the second resource is used to transmit UE2 unique data, the fourth resource is used to transmit UE1 unique data, and the third resource is used to transmit the common data of UE1 data and UE2 data (that is, UE1&UE2 common data).

The present application provides a solution for saving backhaul link data load in IAB, effectively reducing the data load on the backhaul link and conserving wireless resources.

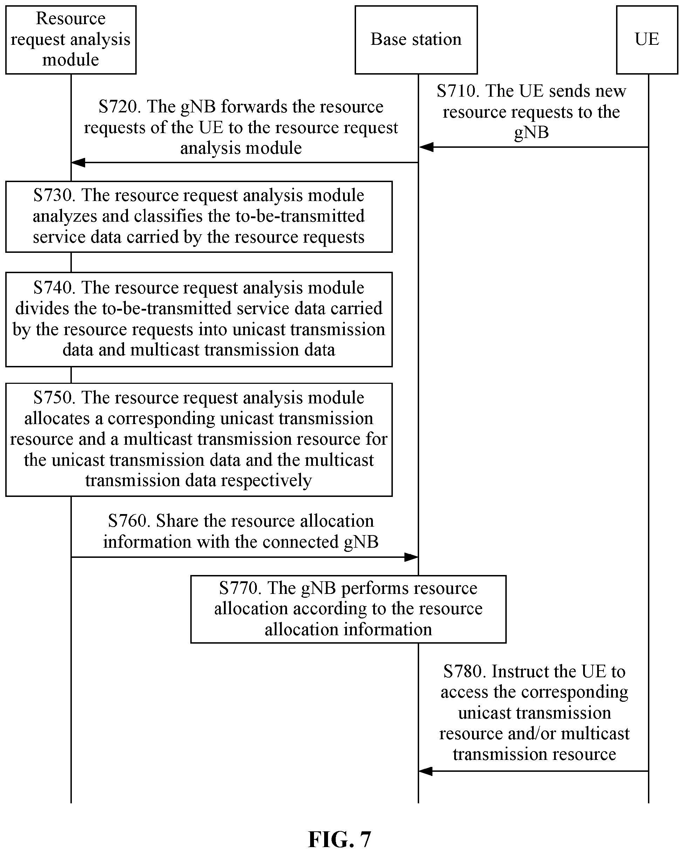

In an embodiment, FIG. 7 is a diagram illustrating interaction for resource allocation according to an embodiment of the present application. In this embodiment, using the first communication node as the core network, the second communication node as the gNB, and the third communication node as the UE by way of example, the process of resource allocation is explained. As shown in FIG. 7, the resource allocation process of this embodiment includes S710 to S780.

In S710, the UE sends new resource requests to the gNB.

In S720, the gNB forwards the resource requests of the UE to the resource request analysis module.

In S730, the resource request analysis module analyzes and classifies to-be-transmitted service data carried by the resource requests.

In S740, the resource request analysis module divides the to-be-transmitted service data carried by the resource requests into unicast transmission data and multicast transmission data.

In S750, the resource request analysis module allocates a corresponding unicast transmission resource and a multicast transmission resource for the unicast transmission data and the multicast transmission data respectively.

In S760, the resource allocation information is shared with the connected gNB.

In S770, the gNB performs resource allocation according to the resource allocation information.

In S780, the UE is instructed to access the corresponding unicast transmission resource and/or multicast transmission resource.

In the embodiment, a resource request analysis module is added to the 5G core network to analyze the resource requests and to-be-transmitted service data and make resource allocation decisions. The resource request analysis module is connected to the geographically corresponding gNBs. The resource request analysis module includes both rule-based classification and AI-based classification. The common part of the to-be-transmitted service data carried in the resource requests sent by the UE can be separated through both the rule-based classification and AI-based classification.

The resource request analysis module allocates resources for unicast and multicast transmission resources for all connected gNBs and shares resource allocation information with the connected gNBs, thereby saving the total resource requirements of the IAB backhaul link. In practical operation, resource allocation can first be divided by time periods, and then AI can provide the optimal allocation.

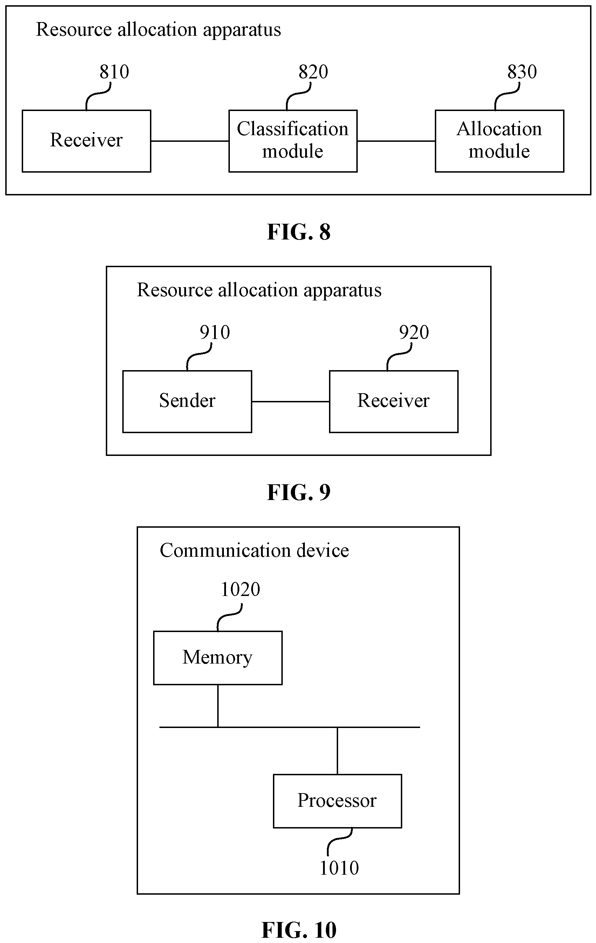

FIG. 8 is a block diagram of a resource allocation apparatus according to an embodiment of the present application. This embodiment is applied by a first communication node. As shown in FIG. 8, the resource allocation apparatus of this embodiment includes a receiver 810, a classification module 820, and an allocation module 830.

The receiver 810 is configured to receive at least two resource requests forwarded by a second communication node and carrying to-be-transmitted service data. The classification module 820 is configured to classify the to-be-transmitted service data carried by each of the at least two resource requests to obtain unicast transmission data and multicast transmission data. The allocation module 830 is configured to allocate a unicast transmission resource and a multicast transmission resource to the unicast transmission data and the multicast transmission data respectively.

In an embodiment, the resource allocation apparatus applied by the first communication node also includes a sender.

The sender is configured to send the unicast transmission resource and the multicast transmission resource to the second communication node to enable the second communication node to instruct a third communication node to transmit the unicast transmission data by using the unicast transmission resource and transmit the multicast transmission data by using the multicast transmission resource.

In an embodiment, the classification module 820 includes a first determination unit and a first classification unit.

The first determination unit is configured to determine a service type of the to-be-transmitted service data carried by each of the at least two resource requests. The first classification unit is configured to classify the to-be-transmitted service data according to the service type to obtain the unicast transmission data and the multicast transmission data.

In an embodiment, the classification module 820 includes a second determination unit and a second classification unit.

The second determination unit is configured to determine a similarity between the to-be-transmitted service data carried by each of the at least two resource requests. The second classification unit is configured to classify the to-be-transmitted service data according to the similarity to obtain the unicast transmission data and the multicast transmission data.

In an embodiment, the classification module 820 is configured to classify, using artificial intelligence, the to-be-transmitted service data carried by each of the at least two resource requests to obtain the unicast transmission data and the multicast transmission data.

In an embodiment, the total amount of transmission resources occupied by the multicast transmission data is less than the total amount of transmission resources occupied by the unicast transmission data.

The resource allocation apparatus of this embodiment is configured to implement the resource allocation method applied by the first communication node according to the embodiment shown in FIG. 1. The implementation principles and technical effects of the resource allocation apparatus of this embodiment are similar to those of the resource allocation method applied by the first communication node according to the embodiment shown in FIG. 1 and thus are not repeated here.

In an embodiment, FIG. 9 is a block diagram of a resource allocation apparatus according to an embodiment of the present application. This embodiment is applied by a second communication node. As shown in FIG. 9, the resource allocation apparatus of this embodiment includes a sender 910 and a receiver 920.

The sender 910 is configured to forward at least two resource requests carrying to-be-transmitted service data to a first communication node to enable the first communication node to classify the to-be-transmitted service data carried by each of the at least two resource requests to obtain unicast transmission data and multicast transmission data.

The receiver 920 is configured to receive a unicast transmission resource and a multicast transmission resource allocated by the first communication node.

In an embodiment, the resource allocation apparatus applied by the second communication node also includes a transmission module.

The transmission module is configured to instruct a third communication node to transmit the unicast transmission data by using the unicast transmission resource and transmit the multicast transmission data by using the multicast transmission resource.

In an embodiment, a total amount of transmission resources occupied by the multicast transmission data is less than a total amount of transmission resources occupied by the unicast transmission data.

The resource allocation apparatus of this embodiment is configured to implement the resource allocation method applied by the second communication node according to the embodiment shown in FIG. 2. The implementation principles and technical effects of the resource allocation apparatus of this embodiment are similar to those of the resource allocation method applied by the second communication node according to the embodiment shown in FIG. 2 and thus are not repeated here.

In an embodiment, FIG. 10 is a diagram illustrating the structure of a communication device according to an embodiment of the present application. As shown in FIG. 10, the device of the present application includes a processor 1010 and a memory 1020. One or more processors 1010 may be configured in the device. FIG. 10 uses one processor 1010 as an example. One or more memories 1020 may be configured in the device. FIG. 10 uses one memory 1020 as an example. The processor 1010 and the memory 1020 of the device may be connected by a bus or in other manners. FIG. 10 uses connection by a bus as an example. In this embodiment, the device may be a resource management component.

As a computer-readable storage medium, the memory 1020 may be configured to store software programs, computer-executable programs, and modules, such as program instructions/modules corresponding to the device of any embodiment of the present application (for example, the receiver 810, the classification module 820, and the allocation module 830 in the resource allocation apparatus). The memory 1020 may include a program storage region and a data storage region. The program storage region may store an operating system and an application program required by at least one function. The data storage region may store data created according to the use of the device. Additionally, the memory 1020 may include a highspeed random-access memory and may also include a nonvolatile memory such as at least one disk memory, a flash memory, or another nonvolatile solid-state memory. In some examples, the memory 1020 may be a memory remote from the processor 1010 and connectable to the device by a network. Examples of the network include, but are not limited to, the Internet, an intranet, a local area network, a mobile communication network, and a combination thereof.

When the communication device is the first communication node, the device may be configured to perform the resource allocation method applied by the first communication node according to any previous embodiment and has corresponding functions and effects.

When the communication device is the second communication node, the device may be configured to perform the resource allocation method applied by the second communication node according to any previous embodiment and has corresponding functions and effects.

An embodiment of the present application provides a storage medium storing computer-executable instructions which, when executed by a computer processor, cause the processor to perform a resource allocation method applied by a first communication node. The resource allocation method applied by the first communication node includes receiving at least two resource requests forwarded by a second communication node and carrying to-be-transmitted service data; classifying the to-be-transmitted service data carried by each of the at least two resource requests to obtain unicast transmission data and multicast transmission data; and allocating a unicast transmission resource and a multicast transmission resource to the unicast transmission data and the multicast transmission data respectively.

An embodiment of the present application provides a storage medium storing computer-executable instructions which, when executed by a computer processor, cause the processor to perform a resource allocation method applied by a second communication node. The resource allocation method applied by the second communication node includes forwarding at least two resource requests carrying to-be-transmitted service data to a first communication node to enable the first communication node to classify the to-be-transmitted service data carried by each of the at least two resource requests to obtain unicast transmission data and multicast transmission data; and receiving a unicast transmission resource and a multicast transmission resource allocated by the first communication node.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processing (DSP), an application-specific integrated circuit (ASIC), a field-programmable gate array (FPGA), and a processor based on a multi-core processor architecture.

## Claims

1. A resource allocation method, the method being applied by a first communication node and comprising:
receiving at least two resource requests forwarded by a second communication node and carrying to-be-transmitted service data;
classifying to-be-transmitted service data carried by each of the at least two resource requests to obtain unicast transmission data and multicast transmission data; and
allocating a unicast transmission resource and a multicast transmission resource to the unicast transmission data and the multicast transmission data respectively.

2. The resource allocation method of claim 1, further comprising:
sending the unicast transmission resource and the multicast transmission resource to the second communication node to enable the second communication node to instruct a third communication node to transmit the unicast transmission data by using the unicast transmission resource and transmit the multicast transmission data by using the multicast transmission resource.

3. The resource allocation method of claim 1 or 2, wherein classifying the to-be-transmitted service data carried by each of the at least two resource requests to obtain the unicast transmission data and the multicast transmission data comprises:
determining a service type of the to-be-transmitted service data carried by each of the at least two resource requests; and
classifying the to-be-transmitted service data according to the service type to obtain the unicast transmission data and the multicast transmission data.

4. The resource allocation method of claim 1 or 2, wherein classifying the to-be-transmitted service data carried by each of the at least two resource requests to obtain the unicast transmission data and the multicast transmission data comprises:
determining a similarity between the to-be-transmitted service data carried by each of the at least two resource requests; and
classifying the to-be-transmitted service data according to the similarity to obtain the unicast transmission data and the multicast transmission data.

5. The resource allocation method of claim 1 or 2, wherein classifying the to-be-transmitted service data carried by each of the at least two resource requests to obtain the unicast transmission data and the multicast transmission data comprises:
classifying, using artificial intelligence, the to-be-transmitted service data carried by each of the at least two resource requests to obtain the unicast transmission data and the multicast transmission data.

6. The resource allocation method of claim 1 or 2, wherein a total amount of transmission resources occupied by the multicast transmission data is less than a total amount of transmission resources occupied by the unicast transmission data.

7. A resource allocation method, the method being applied by a second communication node and comprising:
forwarding at least two resource requests carrying to-be-transmitted service data to a first communication node to enable the first communication node to classify to-be-transmitted service data carried by each of the at least two resource requests to obtain unicast transmission data and multicast transmission data; and
receiving a unicast transmission resource and a multicast transmission resource allocated by the first communication node.

8. The resource allocation method of claim 7, further comprising:
instructing a third communication node to transmit the unicast transmission data by using the unicast transmission resource and transmit the multicast transmission data by using the multicast transmission resource.

9. A communication device, comprising a memory and at least one processor, wherein
the memory is configured to store at least one program; and
when executed by the at least one processor, the at least one program causes the at least one processor to perform the resource allocation method of any one of claims 1 to 6 or any one of claim 7 or claim 8.

10. A storage medium storing a computer program which, when executed by a processor, causes the processor to perform the resource allocation method of any one of claims 1 to 6 or any one of claim 7 or claim 8.
